# EUROPEAN PATENT SPECIFICATION

(11) **EP 0 552 156 B1**
(45) Date of publication and mention of the grant of the patent: **27.12.1996**
(21) Application number: 91911847.1
(22) Date of filing: 28.06.1991
(51) Int. Cl.: F16B 2/20, A44B 17/00, B42F 9/00, E04B 1/61

(54) **CLAMP MEANS FOR HOLDING OBJECTS OR JOINING OBJECTS TOGETHER**
KLEMMVORRICHTUNG ZUM HALTEN ODER MITEINANDER VERBINDEN VON GEGENSTÄNDEN
DISPOSITIF DE SERRAGE DESTINE A PORTER DES OBJETS OU A LES ACCOUPLER

(30) Priority: 28.06.1990 NO 902878
(43) Date of publication of application: 28.07.1993
(73) Proprietor: HANSEN, Arne, 1322 Hövik (NO)
(72) Inventor: HANSEN, Arne, 1322 Hövik (NO)
(74) Representative: Lettström, Richard Wilhelm
(86) International application number: NO9100095
(87) International publication number: WO9200461

(56) References cited:
- EP-A- 0 378 851
- WO-A-87/07223
- WO-A-91/06436
- DE-A- 1 400 868
- DE-B- 2 259 252
- DK-C- 15 268
- GB-A- 11 974
- GB-A- 1 004 132
- GB-A- 1 185 883
- GB-A- 2 092 525
- US-A- 2 251 744
- US-A- 3 220 558
- US-A- 3 267 546
- US-A- 4 998 396

## Description

The present invention generally concerns a clamp means, which comprises two parts and is adapted to join together two objects. Said clamp means preferably has a profiled shape, i.e. it is more or less elongated in shape.

US-A-4,998,396 discloses a clamp means including a male part and a female part, wherein convexly curved, springy profile members are attached along or alongside the upper edge of the female part. The engagement portions of the male part are intended to be clamped to said profile members. The profile members are convexly curved as the engagement portions of the male member, but the clamping effect is not firm and rigid, so that the parts, which consist of interlocking panels, can be detached from each other in a simple way.

In DE-A-14 00 969 a clamp means is described including a male part and a female part, said female part having profile members which are straight and do not have a form which corresponds to the form of the opposed portion of the male member. Hence, the clamping effect is not firm and rigid, resulting in a risk that the members are easily detached from each other.

Several related clamp means are previously known, and the most common in this respect are clamps with elastic U or circular shapes which surround parts of an object which is pushed into the clamp. Ordinary two-part buttons of the snap-fastener type, often used in garments, exhibit a principle which is related to the two-part clamp means of the present invention for joining together two objects.

However, such a snap-fastener operates only in accordance with an elastic principle, and is released by pulling the male part of the button right out again by use of sufficient power, in order to overcome the elasticity in a "retainer spring part" in the female part of the snap-fastener.

However, there exists an obvious need of a clamp means of a substantially stronger type than the above mentioned types, which clamp means may provide the advantage that two objects can be joined together instantaneously to create a very strong unity, and possibly including the opportunity of a release mechanism which can be realized in a simple manner.

The purpose of the invention, namely the strong joining together of two objects, is achieved by providing a preferably profile-shaped clamp means for fast and simple snap joining together of two objects, each object being provided with respectively a male part and a female part of said clamp means, and said female part comprising in cross-section a cavity with a bottom and two side walls, and a springy, barb-like profile element attached along or alongside the upper edge of one or both of the female part walls for providing a retaining effect for said male part when inserting this part into the female part cavity, said profile element extending down into said cavity and being adapted to yield sideways elastically when said male part is inserted into the cavity and engages a profile element surface, and thereafter to be relaxed and return quickly to a less strained position when the tip of said male part has passed by said profile element, the tip of said male part having such dimensions that the tip is retained by the profile element due to a barb effect and against the cavity bottom due to an engagement effect, a further clamping effect also being obtained due to a pinch effect between the profile elements or between the single profile element and the opposite wall, said profile element being convexly curved when viewed in the insertion direction, the free edge of said profile element being located substantially closer to the cavity bottom than to the upper edge of the wall, said male part section behind said tip having a surface with a substantially complementary cross-section shape in relation to said profile element surface when said profile element is in its less strained position, in order to obtain a firm and rigid engagement.

In one embodiment of the present invention, the surface of that male part section which lies behind said tip, is complementary to said profile element surface for some distance along the profile direction.

In certain embodiments, clamp means is relatively elongate in the direction given by said upper edge of a limiting wall of said cavity.

In a central embodiment of the clamp means, the female part has two oppositely arranged profile elements, placed symmetrically and for a symmetrical effect in relation to a central plane spanned by an axis which is parallel to the longitudinal direction of the clamp means along said upper edge, and by the insertion direction for the male part into the cavity, said male part also being correspondingly symmetrically shaped behind its tip for a double complementary engagement effect against the two profile elements when in their less strained positions.

In a very favourable embodiment of the clamp means, the tip of the male part has a tapered forward section which fits complementarily into a correspondingly shaped recess in the cavity bottom, for further support effect.

In most embodiments of the clamp means in accordance with the present invention, it is important that it can be released in a simple manner, and one embodiment of the clamp means is that it is typically long in the direction given by said upper edge and comprises one or several sections without profile elements in the female part thereof, and with corresponding sections in offset positions in the male part without tip dimensions for providing the barb effect, in such a manner that the male part can be released from the female part by a relative displacement along the longitudinal direction, until said sections are in such a position that no locking/holding effect is present.

An alternative embodiment in order to provide a simple release, is that the female part is designed typically long in the direction given by said upper edge, and with at least one section without profile elements, and that the male part has an extent in the same said direction which is somewhat less than the extent of said at least one section without profile elements, so that said male part can be released from the female part by means of a relative displacement along the longitudinal direction, until the male part is located in said section and no locking/holding effect is present.

In another embodiment of the most generally stated clamp means specified above, the female part has two oppositely arranged profile elements, placed symmetrically and for symmetrical effect in relation to a central plane spanned by an axis which is parallel to the longitudinal direction of the clamp means along said upper edge, and by the insertion direction for the male part into the cavity, however the male part is in this case shaped rotation symmetrically about an axis in the insertion direction, and has a surface in the area behind the tip, the cross-section shape of which is complementary to the cross-section shape of the two profile elements when in their less strained positions and in contact with said male part, for achieving a double complementary engagement effect along the curves of contact.

The two-part clamp means leads to a simple joining together of two objects by pushing these objects towards each other. The two objects are also separated in an equally simple manner, if this is a desirable embodiment, by mutual displacement along the joining profiles. These may then possibly be equipped with sections without locking edges, where the objects may be pulled apart from each other.

In the following, the invention will be described more closely by means of examples, and with reference to the enclosed drawing figures, where
- Fig. 1: shows the basic shape of a female part of a clamp means,
- Fig. 2: shows a clamp means for retaining papers,
- Fig. 3: shows the clamp means in an embodiment of the invention as a joining means for two objects,
- Fig. 4: shows a snap-fastener embodiment of the invention,
- Fig. 5: shows a more advanced and releasable embodiment of a female part in accordance with the clamp means of the invention, and

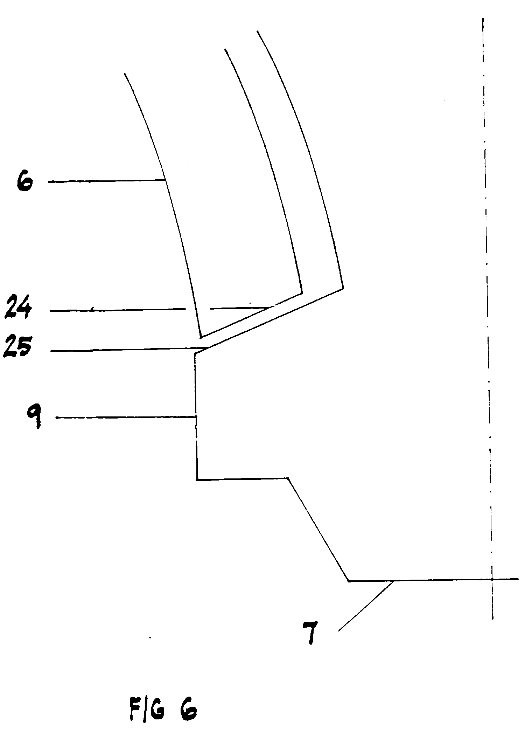

- Fig. 6: shows a detail embodiment of central elements of the invention.

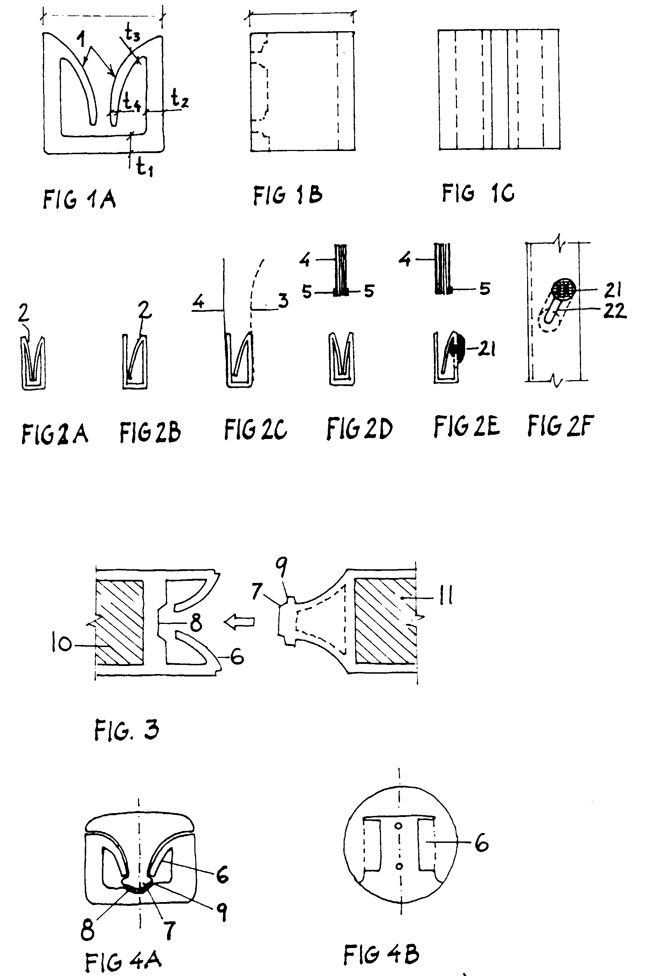

In Figs. 1A, B and C is shown a clamp means for retaining an object, i.e. a one-part clamp means for retaining a suitably large object. Fig. 1A shows a cross-section through the profile-shaped, i.e. in principle elongated clamp means (elongated in the direction perpendicular to the paper plane). The longitudinal extent of the clamp means can of course vary, but the point is that one deals with a profile shape, i.e. the shape is uniform in the longitudinal direction.

In the case shown here, the longitudinal direction has a dimension of length H, shown in Fig. 1C. In Fig. 1C two screw holes also appear, which screw holes are also shown in Fig. 1B where the clamp means is displayed in a side view. As an example one may envisage one or two such, by themselves relatively short (length H) clamp means fastened on a wall right above each other in order to hold a garden rake, a spade or a similar object. Such an object often has a circular cross-section, and the object may then be pushed rather simply right into the open groove which is accessible in the middle of each clamp means, as appears from fig. 1C. Viewed from above, the handle of the rake or spade will exhibit a circular cross section which is pushed in between the two springy profile elements 1 in fig. 1A, all the way until it engages the bottom (indicated with thickness tl). By selecting the material and varying the dimensions A, B, H etc. and thicknesses T1-T4, characteristics adapted for the intended field of use are achieved. It is clear that one particular such clamp cannot hold objects of all sizes, but it must be adapted to one certain range of sizes for the object to be retained. The gripping springs or profile elements 1 can also be equipped with a friction pattern on the side facing the object to be retained.

Thus, the retained object lies engagingly on the bottom and is pinched between the two profile elements 1 which have an elasticity adapted to the purpose. In the case shown, the object will normally be removable by simply pulling it right out again, but in a case where the dimensions of the profile elements 1, the rest of the clamp means and the object is such that the profile elements return somewhat toward their relaxed position when the thickest part of the object has passed by, there will in addition occur a barb effect, and the object must then be removed by displacing it along the profile direction.

Fig. 2 shows a clamp means for retaining papers, and different forms are shown in figs. 2A-2F. Typically such a clamp means will be constructed with a length (perpendicularly to the paper plane) about equal to an A4-sheet and with gripping springs or profile elements 2 along the whole length of the clamp means or in sections of the total length. In figs. 2A and 2B are shown simple devices where quite simply a sheet collection can be pushed right in for retaining, either by means of two profile elements as shown in fig. 2A, or by means of merely one profile element as shown in fig. 2B. In both cases the sheets can possibly be pulled right out again.

In fig. 2C is shown a somewhat more advanced version of the same device as in fig. 2B. Here the two upright walls of the clamp means are provided with elongation sections, i.e. the elongations 4 constitute a preferably rigid backside or underside for the papers to be retained, and elongation 3 is a preferably transparent, possibly flexible front page. Such cover sheets are known per se in ordinary plastic folders for paper storage.

It is also possible to construct even more advanced versions of document clamping devices, which appear from figs. 2D-2F.

Fig. 3 shows an example of the invention. Also in this case there is shown a cross section through profile-shaped objects 10 and 11 which are provided with respectively a female part and a male part of a profile-shaped clamp means. The female part of the clamp means is in this embodiment example constructed integrally with the object 10, the female part bottom being provided with a recess 8 and being of a symmetrically shaped type with two profile elements or springs 6 with a convexly curved shape when viewed from the outside, and this female part is adapted to receive a male part with substantially complementary shape. This male part is in a corresponding manner designed as a part of the object 11 which shall be locked to object 10. The locking operation is made in a very simple manner in this case, by moving the two objects 10 and 11 right toward each other, see the arrow, the elasticity of the profile elements 6 causing these profile elements to yield sidewise, allowing the tip 7, 9 of the male part to penetrate to the bottom of the female part. The two profile elements 6 slip back to a less strained position immediately when tip 9 has passed by, and a joining connection with a very large engagement surface is obtained. When the material dimensions have been machined with sufficient precision, this joint will be very strong, with good rigidity in all directions. Such a joint clamp means can provide both temporary and permanent connection of two objects, or of several similar objects according to a tongue and groove principle.

The tip 9 of the male part has dimensions which are precisely adapted, so that there is achieved simultaneous engagement against the bottom and complementary engagement of the profile elements against the curved male part surface.

The female and the male parts of the clamp means must not necessarily be integrally constructed with the objects to be fastened together, but may equally well be screwed separately on to each respective object, in an analogous manner with the device shown in fig. 1.

However, in its most general form, this clamp means is not necessarily equipped with two symmetrical profile elements, and nor must the male part surface be completely complementary designed in relation to the surfaces of the female part. The important and quite essential feature is that the female part has at least one convexly curved profile element, attached along the outer edge of the female part, and in such a manner that it extends a substantial part of the way down into the female part cavity, that the profile element is elastic, and the the tip of the male part has dimensions adapted to be clamped by the profile element by a barb effect and against the cavity bottom by an engagement effect. The male part is then retained in three simultaneous manners, namely by the possibly one spring (or profile element) pinching the male part against the opposite wall or possibly against the opposite profile element, by said profile element operating as a barb and by said male part engaging the bottom of the female part.

Of course it is possible to utilize such a clamp means as the type shown in fig. 3 to make a permanent joint. One may then simply envisage the female and the male part being quite uniform along the total profile length, and that blocking plates are provided in both ends thereof, so that the two parts cannot be shifted along each other (i.e perpendicular to the paper plane).

On the other hand, if such a longitudinal displacement is possible along the whole profile length, it will of course be possible to release the male part and the female part from each other in this manner. However, if one is dealing with typically long objects, it will be favourable to provide both male part and female part with sections without a tip 9 respectively profile elements 6. With such sections intercalated in suitable positions, male and female parts can be pulled apart after only a short longitudinal relative displacement. Possibly, when the male part has a substantially shorter extent in the longitudinal direction than the female part, the female part can be provided with a section without profile elements, and this section will then be somewhat longer than the extent of the male part in a longitudinal direction, so that the male part can be released from the female part by means of a longitudinal shift movement until it is positioned in this opening.

In the clamp means shown in fig. 3, the male part at the right in the drawing may also have a rotation symmetrical shape, about an axis in the same direction as the arrow. Such an embodiment is of course not as strong as that embodiment which utilizes a logitudinal profile shape also regarding the male part, however also such a joint clamp means will exhibit a certain degree of rigidity against bending "out of the paper plane", even though the complementary engagement between the two parts in such a case actually only takes place along two curves of contact. However, such a means may have clear advantages within the art of building constructions.

Figs. 4A and 4B show a snap-fastener embodiment of the present invention. Viewed from above, i.e. along the axis indicated in fig. 4A, the push-button has in this case a circular shape, i.e. the upper part of the male part is substantially circular. The male part can be pushed down into the female part in a quite similar manner as previously mentioned, and provides a very good hold between the two parts. However, in total this button embodiment is not profile-shaped, even if the operational section of the female part of the button actually is. This appears most clearly from fig. 4B, which displays the female part in a view from above. It appears from fig. 4B that the cavity is closed in one end (up in the plane of the drawing) and open in the other end. Thus, with such a shape it is possible to shift the male part along the profile elements 6 and out of the female part in the open end thereof (downward in fig. 4B). Such a snap-fastener is well suited for e.g. holding parts of garments together, since the release movement is made in the opposite direction of the natural pulling force in the garment parts.

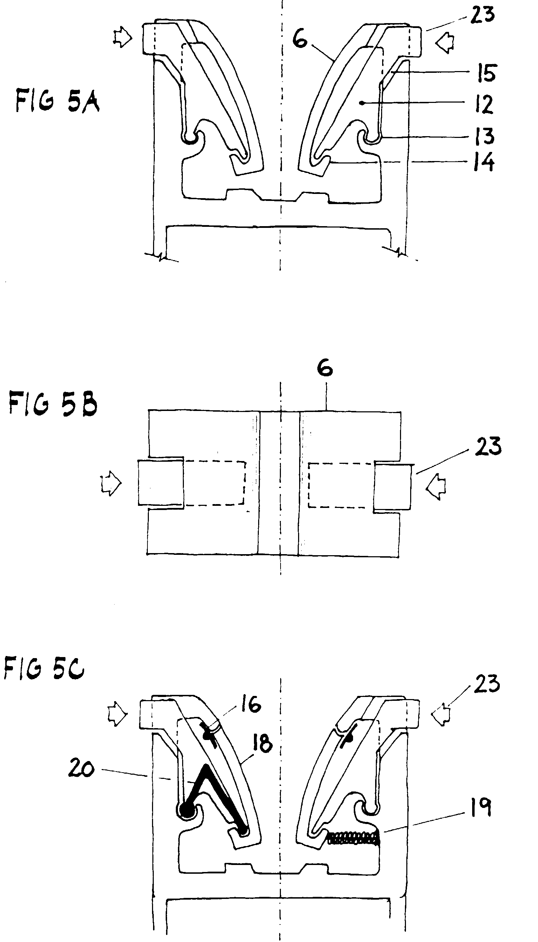

In figs. 5A and 5B there is shown a more advanced embodiment of a female part of a clamp in accordance with the invention. As appears most clearly from fig. 5B, showing the female part in a view from above, i.e. one views down into the cavity, holes are provided on both sides on the top at the edges of the female part walls. A lever 12 is arranged behind each profile element 6, and the profile elements as well as the female part walls are further refined. The lower edge of each profile element 6 is provided with a groove 14, and a protruding rim on a first arm of lever 12 thrusts down into this groove 14. Further, lever 12 has a support arm which reaches down to be supported in a second groove 13 provided on the inside of the wall. The lever also has a second arm extending in the opposite direction in relation to the said first arm, and this second arm has an end part 23 projecting out through the hole in the upper edge of the female part.

As indicated with arrows in both figs. 5A and 5B, it is possible to push or squeeze the projecting end parts 23, to the effect that the lower edges of the profile elements move sideways and out. Thereby a male part which possibly has been entered in the female part, can be released by pulling directly outwards. The arm dimensions are such that a favourable translation ratio is achieved, i.e. the moment arm to end part 23 is longer than the moment arm to groove 14 from the pivot axis in the second groove 13.

A further variant of the same principle can be found in fig. 5C. In this case, which as a starting point is the same as that shown in figs. 5A and B, the elasticity of the system is provided by means of an articulation, shown at hinge 16, and alternative spring means 19 or 20 (those shown in the same fig. 5C on respective sides) mounted between the lower part of the profile element and the wall adjacent to the profile element. The same release possibility as in the previous case is also shown here, but the springy mobility in the profile elements is in this case obtained by a spring action in spiral spring 19 or leaf spring 20, and the articulate motion of the lower section 18 of the profile element about hinge 6. This solution may be of interest regarding embodiments of the clamp means with higher rigidity and/or larger dimensions.

## Claims

1. A clamp means, preferably with a profile-shaped design, for joining together two objects (10, 11) in a fast and simple snap manner, each object (10, 11') being provided with respectively a male part and a female part of said clamp means, and said female part comprising in cross section an elongate cavity with a bottom and two side walls, and a springy, barb-like profile element (6) attached along or alongside the upper edge of one or both of the female part walls for providing a retaining effect for the male part when inserting this part into the female part cavity, said profile element (6) extending down into said cavity and being adapted to yield elastically sideways when the male part is inserted in the cavity and engages a profile element surface, and thereafter to be relaxed and return quickly to a less strained position when the tip (9) of the male part has passed by the profile element (6), the male part tip (9) having such dimensions that said tip (9) is retained by the profile element due to a barb effect and against the cavity bottom due to an engagement effect, a further clamping effect also being obtained due to a pinch effect between the profile elements (6) or between the single profile element and the opposite wall, said profile element (6) being convexly curved when viewed in the insertion direction, the free edge of said profile element being located substantially closer to the cavity bottom than to the upper edge of the wall, said male part section behind said tip (9) having a surface with a substantially complementary cross section shape in relation to said profile element surface when the profile element is in its less strained position, in order to obtain a firm and rigid engagement.

2. Clamp means in accordance with claim 1, **characterized** in that said male part surface is complementary to said profile element surface for some distance along the profile direction.

3. Clamp means in accordance with claim 1 or 2, **characterized** in that it is elongate in the direction given by said upper edge of a cavity limiting wall, i.e. in the profile direction.

4. Clamp means in accordance with any of claims 1 - 3, **characterized** in that the lower edge of each respective profile element (6) is shaped, in a cross sectional view, with a straight cut (24) in an inclined direction substantially down toward the adjacent bottom/wall corner in the cavity, and that the cross section shape of said male part is complementary to this shape also at the rear edge (25) of the tip (9).

5. Clamp means in accordance with any of claims 1 - 4, said female part comprising in cross section a substantially U-shaped cavity with a bottom and two upright walls, and two oppositely arranged profile elements (6), **characterized** in that said profile elements (6) are placed in a symmetrical manner and for symmetrical effect in relation to a central plane spanned by an axis which is parallel to the longitudinal direction of the clamp means along said upper edge, and by the insertion direction for the male part into said cavity, said male part also being correspondingly symmetrically shaped behind its tip (9) for a double complementary engagement effect against the two profile elements (6) when in their less strained positions.

6. Clamp means in accordance with any of claims 1 - 4, said female part comprising in cross section a substantially U-shaped cavity with a bottom and two upright walls, and two oppositely arranged profile elements (6), **characterized** in that the profile elements (6) are placed symmetrically and for symmetrical effect in relation to a central plane spanned by an axis which is parallel to the longitudinal direction of the clamp means along said upper edge, and by the insertion direction for the male part into the cavity, and that said male part is rotation symmetrically shaped about an axis in the insertion direction, with a surface the cross sectional shape of which in the section behind said tip (9) is complementary to the cross sectional shape of the two profile elements (6) when in their less strained positions and in contact with the male part, for obtaining a double complementary engagement effect alonq the curves of contact.

7. Clamp means in accordance with claim 5 or 6, **characterized** in that the male part tip (9) has a tapered forward section (7) which fits complementarily into a correspondingly shaped recess (8) in the cavity bottom, for further support effect.

8. Clamp means in accordance with any of claims 5 - 7, **characterized** in that
(a) the lower edge of each profile element (6) has a longitudinally extending part which is curved rearwardly toward the adjacent wall and up, thereby providing a first groove (14),
(b) each respective wall has on the inside thereof arranged a longitudinally extending section which projects inwardly and up at a height between said edge groove (14) and the upper edge of the wall, thereby providing a second groove (13), and
(c) a rigid lever (12) is arranged behind each respective profile element (6), said lever (12), comprising
a first arm with a rim protruding down into said first groove (14),
a support arm in an inclined relation to said first arm, said support arm having an end thereof in engagement with the second groove (13) for providing a pivot axis for said lever (12), and
a second arm in the opposite direction of said first arm, said second arm having an end part (23) projecting out through a hole (15) in the upper edge of the female part, said hole (15) being provided for that purpose,
said levers (12), on both sides of said clamp means, being adapted, when both end parts (23) are pushed or squeezed to bend said profile elements (6) backwards and away from a possibly retained male part, in order that said male part may be pulled right out of the female part again, the distance from said pivot axis to the squeeze position of an end part (23) being larger than the distance to the first groove (14), so that the necessary squeeze force is reduced due to a favourable moment arm ratio.

9. Clamp means in accordance with claim 8, **characterized** in that both profile elements (6) are articulated along the profile direction with hinges (16) mounted on the backside thereof, the springy effect of the profile elements being provided by separate spring devices (19; 20) mounted between the backside of the respective profile element and the adjacent wall.

10. Clamp means in accordance with any of claims 5 - 9, **characterized** in that it is constructed long in the direction given by said upper edge and with one or several sections without profile elements (6) in the female part, and with corresponding sections in off-set positions in the male part without tip dimensions for providing the barb effect, so that the male part can be released from the female part by a relative displacement along the longitudinal direction, until said sections are in such a position that no locking/holding effect is present.

11. Clamp means in accordance with any of claims 5 - 9, **characterized** in that said female part is constructed long in the direction given by said upper edge and with at least one section without profile elements, and that said male part has an extent in the same said direction which is somewhat less than the extent of said at least one section without profile elements, so that the male part can be released from the female part by a relative displacement along the longitudinal direction, until said male part is located in said section and no locking/holding effect is present.

## Patentansprüche

1. Klemmvorrichtung, vorzugsweise mit einer profilförmigen Gestaltung, zum schnellen und einfachen Schnappverbinden von zwei Gegenständen (10, 11), wobei jeder Gegenstand (10, 11) jeweils mit einem Steckerteil und einem den Stecker aufnehmenden Teil der Klemmvorrichtung versehen ist, und das den Stecker aufnehmende Teile im Querschnitt eine langgestreckte Aushöhlung mit einem Boden und zwei Seitenwänden und ein federndes, widerhakenartiges Profilelement (6) umfaßt, das entlang oder längsseits dem oberen Rand von einer oder mehreren der Wände des den Stecker aufnehmenden Teils angebracht ist, um einen Halteeffekt für das Steckerteil zu schaffen, wenn dieses in die Aushöhlung des den Stecker aufnehmenden Teils eingesteckt wird, wobei sich das Profilelement (6) nach unten in die Aushöhlung erstreckt und seitwärts elastisch nachgibt, wenn das Steckerteil in die Aushöhlung des den Stecker aufnehmenden Teils eingesteckt wird und mit einer Profilelementfläche in Eingriff tritt, und um anschließend entspannt zu werden und schnell in eine weniger belastete Position zurückzukehren wenn die Spitze (9) des Steckerteils das Profilelements passiert hat, wobei die Steckerteilspitze (9) derartige Abmessungen besitzt, daß die Spitze (9) durch das Profilelement infolge eines Widerhakeneffekts und gegen den Boden der Aushöhlung infolge eines Eingriffeffekts gehalten wird, wobei ein weiterer Klemmeffekt auch durch einen Klemmeffekt zwischen den Profilelementen (6) oder zwischen dem einzelnen Profilelement und der gegenüberliegenden Wand erzielt wird, wobei das Profilelement (6) bei Betrachtung in Einsteckrichtung konvex gekrümmt ist, und sich der freie Rand des Profilelements wesentlichen näher zu dem Boden der Aushöhlung als zu dem oberen Rand der Wand befindet, und wobei der Steckerteilabschnitt hinter der Spitze (9) eine Fläche mit einer in Relation zu der Profilelementfläche im wesentlichen komplementären Querschnittsform besitzt wenn sich das Profilelement in seiner weniger belasteten Position befindet, um einen festen und starren Eingriff zu erzielen.

2. Klemmvorrichtung nach Anspruch 1, **dadurch gekennzeichnet, daß** die Steckerteilfläche über eine gewisse Strecke entlang der Profilrichtung komplementär zu der Profilelementfläche ist.

3. Klemmvorrichtung nach Anspruch 1 oder 2, **dadurch gekennzeichnet, daß** diese in der durch den oberen Rand einer Aushöhlungsbegrenzungswand gegebenen Richtung, d.h. in der Profilrichtung, langgestreckt ist.

4. Klemmvorrichtung nach einem beliebigen der Ansprüche 1 bis 3, **dadurch gekennzeichnet, daß** der untere Rand eines jeweiligen Profilelements (6) in einer Querschnittsansicht mit einem geraden Schnitt (24) versehen ist, der in einer im wesentlichen nach unten in die Nähe der in der Aushöhlung befindlichen Boden-/Wandecke gerichteten schrägen Richtung verläuft.

5. Klemmvorrichtung nach einem beliebigen der Ansprüche 1 bis 4, das den Stecker aufnehmende Teil umfassend im Querschnitt eine im wesentlichen U-förmige Aushöhlung mit einem Boden und zwei geraden Wänden, und zwei gegenüberliegend angeordnete Profilelemente (6), **dadurch gekennzeichnet, daß** die Profilelemente (6) in einer symmetrischen Art und Weise und für einen Symmetrieeffekt in Relation zu einer Zentralebene angebracht sind, die aufgespannt ist durch eine parallel zu der Längsrichtung der Klemmvorrichtung entlang dem oberen Rand verlaufende Achse, und durch die Einsteckrichtung für das Steckerteil in die Aushöhlung, wobei das Steckerteil auch hinter seiner Spitze entsprechend symmetrisch geformt ist für einen doppelten komplementären Eingriffseffekt gegen die zwei Profilelemente (6), wenn sich diese in ihrer weniger belasteten Position befinden.

6. Klemmvorrichtung nach einem beliebigen der Ansprüche 1 bis 4, das den Stecker aufnehmende Teil umfassend im Querschnitt eine im wesentlichen U-förmige Aushöhlung mit einem Boden und zwei geraden Wänden, und zwei gegenüberliegend angeordnete Profilelemente (6), **dadurch gekennzeichnet, daß** die Profilelemente (6) in einer symmetrischen Art und Weise und für einen Symmetrieeffekt in Relation zu einer Zentralebene angebracht sind, die aufgespannt ist durch eine parallel zu der Längsrichtung der Klemmvorrichtung entlang dem oberen Rand verlaufende Achse, und durch die Einsteckrichtung für das Steckerteil in die Aushöhlung, und daß das Steckerteil um eine in der Einsteckrichtung liegende Achse rotationssymmetrisch geformt ist, mit einer Fläche, deren Querschnittsform in dem Abschnitt hinter der Spitze (9) komplementär zu der Querschnittsform der beiden Profilelemente (6) ist, wenn sich diese in Ihrer weniger belasteten Position und in Kontakt mit dem Steckerteil befinden, um einen doppelten komplementären Eingriffseffekt entlang der Kontaktkurve zu erzielen.

7. Klemmvorrichtung nach Anspruch 5 oder 6, **dadurch gekennzeichnet, daß** die Steckerteilspitze (9) einen sich verjüngenden Frontabschnitt (7) besitzt, der zum Zwecke eines weiteren Halteeffekts komplementär in eine entsprechend geformte Ausnehmung (8) in dem Boden der Aushöhlung paßt.

8. Klemmvorrichtung nach einem beliebigen der Ansprüche 5 bis 7, **dadurch gekennzeichnet, daß**
a) der untere Rand eines jeden Profilelements (6) ein sich der Länge nach erstreckendes Teil besitzt, das nach hinten zu der benachbarten Wand und nach oben gekrümmt ist, und dadurch eine erste Nut (14) bildet,
b) eine jeweilige Wand an ihrer Innenseite einen sich der Länge nach erstreckenden Abschnitt besitzt, der in einer zwischen der Randnut (14) und dem oberen Rand der Wand befindlichen Höhe nach innen und nach oben hervorsteht und dadurch eine zweite Nut (13) bildet, und
c) ein starrer Hebel (12) hinter einem jeweiligen Profilelement (6) angeordnet ist, der Hebel (12) umfassend
einen ersten Arm mit einem Rand, der in die erste Nut (14) ragt,
einen in einer zu dem ersten Arm schrägen Anordnung befindlichen Stützarm, dessen eines Ende zur Schaffung einer Schwenkachse in Eingriff mit der zweiten Nut (13) steht, und
einen in einer zu dem ersten Arm entgegengesetzten Richtung befindlichen zweiten Arm, der ein durch ein Loch (15), das zu diesem Zweck in dem oberen Rand des das Steckerteil aufnehmenden Teils vorgesehen ist, ragendes Endstück (23) besitzt, wobei die auf beiden Seiten der Klemmvorrichtung vorgesehenen Hebel (12) dazu ausgelegt sind, daß das Steckerteil, wenn beide Endstücke (23) gedrückt oder zusammengepreßt werden, um die Profilelemente (6) von einem eventuell gehaltenen Steckerteil zurück und wegzubiegen, wieder aus dem das Steckerteil aufnehmenden Teil herausgezogen werden kann, wobei die Entfernung von der Schwenkachse zu der Position des Zusammendrückens eines Endstücks (23) größer als die Entfernung zu der ersten Nut (14) ist, so daß die erforderliche Zusammendrückkraft infolge eines günstigen Hebelarmverhältnisses reduziert ist.

9. Klemmvorrichtung nach Anspruch 8, **dadurch gekennzeichnet, daß** beide Profilelemente (6) entlang der Profilrichtung mit Scharnieren (16), die an der Rückseite der Profilelemente angebracht sind, gelenkig miteinander verbunden sind, und der Federeffekt der Profilelemente durch separate Federeinrichtungen (19; 20) geschaffen wird, die zwischen der Rückseite der jeweiligen Profilelemente und der benachbarten Wand befestigt sind.

10. Klemmvorrichtung nach einem beliebigen der Ansprüche 5 oder 9, **dadurch gekennzeichnet, daß** diese in der durch den oberen Rand gegebenen Richtung lang ausgestaltet ist, mit einem oder mehreren Abschnitten ohne Profilelemente (6) in dem das Steckerteil aufnehmenden Teil, und mit entsprechenden Abschnitten in gegeneinander versetzten Positionen in dem Steckerteil, ohne Spitzenabmessungen zur Schaffung des Widerhakeneffekts, so daß das Steckerteil durch eine relative Verschiebung entlang der Längsrichtung, bis sich die Abschnitte in solch einer Position befinden, daß kein Verriegelungs-/Halteeffekt mehr vorhanden ist, aus dem das Steckerteil aufnehmenden Teil gelöst werden kann.

11. Klemmvorrichtung nach einem beliebigen der Ansprüche 5 oder 9, **dadurch gekennzeichnet, daß** das den Stecker aufnehmende Teil in der durch den oberen Rand gegebenen Richtung lang ausgestaltet ist, mit wenigstens einem Abschnitt ohne Profilelemente, und daß das Steckerteil in der gleichen Richtung eine Ausdehnung besitzt, die ein wenig kleiner als die Ausdehnung des wenigstens einen Abschnitts ohne Profilelemente ist, so daß das Steckerteil durch eine relative Verschiebung entlang der Längsrichtung, bis sich das Steckerteil in dem Abschnitt befindet und kein Verriegelungs-/Halteeffekt mehr vorhanden ist, von dem das Steckerteil aufnehmenden Teil gelöst werden kann.

## Revendications

1. Dispositif de fixation, ayant de préférence une forme profilée, pour accoupler deux objets (10, 11) par encliquetage simple et rapide, chaque objet (10, 11) étant pourvu respectivement d'une partie mâle et d'une partie femelle dudit dispositif de fixation, et ladite partie femelle comprenant en section transversale une cavité allongée avec un fond et deux parois latérales, et un élément (6) flexible du type languette de retenue fixé le long du bord supérieur de l'une des parois ou des deux parois de la partie femelle pour fournir un effet de retenue de la partie mâle lors de l'insertion de cette partie dans la cavité de la partie femelle, ledit élément profilé (6) s'étendant vers le bas dans ladite cavité et étant prévu pour fléchir latéralement de manière élastique lorsque la partie mâle est insérée dans la cavité et s'engage avec une surface de l'élément profilé, et ensuite pour se relâcher et revenir rapidement à une position de moindre contrainte lorsque l'extrémité (9) de la partie mâle a passé l'élément profilé (6), l'extrémité (9) de la partie mâle ayant une forme telle que ladite extrémité (9) est retenue par l'élément profilé en raison d'un effet de retenue et contre le fond de la cavité en raison d'un effet d'engagement, un effet de fixation supplémentaire étant également obtenu en raison d'un effet de pincement entre les éléments profilés (6) ou entre l'élément profilé unique et la paroi opposée, ledit élément profilé (6) étant incurvé de manière convexe lorsqu'il est observé dans le sens d'insertion, le bord libre dudit élément profilé étant placé sensiblement plus proche du fond de la cavité que du bord supérieur de la paroi, ladite section de partie mâle en arrière de ladite extrémité (9) ayant une surface, dont la forme en coupe transversale est sensiblement complémentaire, en relation avec ladite surface de l'élément profilé lorsque l'élément profilé est dans sa position de moindre contrainte, afin d'obtenir un engagement solide et rigide.

2. Dispositif de fixation selon la revendication 1, caractérisé en ce que ladite surface de partie mâle est complémentaire de ladite surface d'élément profilé sur une certaine distance dans le sens de profilage.

3. Dispositif de fixation selon la revendication 1 ou 2, caractérisé en ce qu'il est allongé dans le sens donné par ledit bord supérieur d'une paroi limitant la cavité, c'est à dire dans le sens de profilage.

4. Dispositif de fixation selon l'une quelconque des revendications 1 à 3, caractérisé en ce que le bord inférieur de chaque élément profilé correspondant (6) est formé, en coupe transversale, d'une découpe droite (24) dans un sens incliné sensiblement vers le bas en direction du coin de paroi/fond adjacent de la cavité, et en ce que la forme en coupe transversale de ladite partie mâle est complémentaire de cette forme également au niveau du bord arrière (25) de l'extrémité (9).

5. Dispositif de fixation conforme à l'une quelconque des revendications 1 à 4, ladite partie femelle comprenant en coupe transversale une cavité de forme sensiblement en U avec un fond et deux parois verticales, et deux éléments profilés (6) agencés de manière à faire face, caractérisé en ce que lesdits éléments profilés (6) sont placés de manière symétrique et pour avoir un effet symétrique par rapport à un plan central traversé par un axe qui est parallèle à la direction longitudinale du dispositif de fixation le long dudit bord supérieur, et par le sens d'insertion de la partie mâle dans ladite cavité, ladite partie mâle ayant également une forme correspondante symétrique en arrière de son extrémité (9) pour un double effet d'engagement complémentaire contre les deux éléments profilés (6) lorsqu'ils sont dans leur position de moindre contrainte.

6. Dispositif de fixation selon l'une quelconque des revendications 1 à 4, ladite partie femelle comprenant en coupe transversale une cavité de forme sensiblement en U avec un fond et deux parois verticales, et deux éléments profilés (6) agencés de manière à se faire face, caractérisé en ce que les éléments profilés (6) sont placés de manière symétrique et pour avoir un effet symétrique par rapport à un plan central traversé par un axe qui est parallèle à la direction longitudinale du dispositif de fixation le long dudit bord supérieur, et par le sens d'insertion de la partie mâle dans la cavité, et en ce que ladite partie mâle a une symétrie de révolution autour d'un axe dans le sens d'insertion, avec une surface dont la forme en coupe transversale dans la section en arrière de ladite extrémité (9) est complémentaire de la forme en coupe transversale des deux éléments profilés (6) lorsqu'ils sont dans leur position de moindre contrainte et en contact avec la partie mâle, pour obtenir un double effet d'engagement complémentaire le long des courbes de contact.

7. Dispositif de fixation selon la revendication 5 ou 6, caractérisé en ce que l'extrémité de partie mâle comprend une section avant (7) biseautée qui s'adapte de manière complémentaire dans un évidement de forme correspondante (8) dans le fond de la cavité, pour un effet de support supplémentaire.

8. Dispositif de fixation selon l'une quelconque des revendications 5 à 7, caractérisé en ce que
(a) le bord inférieur de chaque élément profilé (6) a une partie s'étendant longitudinalement qui est incurvée vers l'amère en direction de la paroi adjacente et vers le haut, fournissant ainsi une première gorge (14),
(b) sur le côté intérieur de chaque paroi correspondante, il est agencé une section s'étendant longitudinalement qui fait saillie à l'intérieur et vers le haut à une hauteur comprise entre ladite gorge de bord (14) et le bord supérieur de la paroi, fournissant ainsi une seconde gorge (13), et
(c) un levier rigide (12) est agencé en arrière de chaque élément profilé correspondant (6), ledit levier (12) comprenant un premier bras avec un rebord faisant saillie vers le bas dans ladite première gorge (14),
un bras de support incliné par rapport audit premier bras, ledit bras de support ayant une de ses extrémités s'engageant avec la seconde gorge (13) pour fournir un axe de pivot pour ledit levier (12), et un second bras dans le sens opposé audit premier bras, ledit second bras ayant une partie d'extrémité (23) s'étendant hors d'un orifice (15) dans le bord supérieur de la partie femelle, ledit orifice (15) étant prévu pour cela, lesdits leviers (12), des deux côtés dudit dispositif de fixation, étant adaptés, lorsque les deux parties d'extrémité (23) sont poussées ou pressées pour courber lesdits éléments profilés (6) vers l'arrière et les écarter d'une partie mâle éventuellement retenue, afin que ladite partie mâle puisse être retirée de la partie femelle, la distance dudit axe de pivot à la position de pressage d'une partie d'extrémité (23) étant plus grande que la distance par rapport à la première gorge (14), de telle sorte que la force de pressage nécessaire est réduite en raison d'un rapport bras moment favorable.

9. Dispositif de fixation selon la revendication 8, caractérisé en ce que les deux éléments profilés (6) sont articulés le long de la direction de profilage avec des charnières (16) montées sur le côté arrière de ceux-ci, l'effet flexible des éléments profilés étant fourni par des dispositifs élastiques distincts (19, 20) montés entre le côté arrière de l'élément profilé correspondant et la paroi adjacente.

10. Dispositif de fixation selon l'une quelconque des revendications 5 à 9, caractérisé en ce qu'il est conçu pour être long dans le sens donné par ledit bord supérieur et pour avoir une ou plusieurs sections sans éléments profilés (6) dans la partie femelle, et pour avoir des sections correspondantes à des positions décalées dans la partie mâle sans formes d'extrémité pour fournir un effet de retenue, de telle sorte que la partie mâle puisse être libérée de la partie femelle par un déplacement relatif dans le sens longitudinal, jusqu'à ce que lesdites sections soient dans une position telle qu'il n'y a aucun effet de blocage ou de support.

11. Dispositif de fixation selon l'une quelconque des revendications 5 à 9, caractérisé en ce que ladite partie femelle est conçue pour être longue dans la direction donnée par ledit bord supérieur et pour avoir au moins une section sans éléments profilés, et en ce que ladite partie mâle a une étendue dans la même dite direction qui est quelque peu inférieure à l'étendue de ladite au moins une section sans éléments profilés, de telle sorte que la partie mâle puisse être libérée de la partie femelle par un déplacement relatif dans le sens longitudinal, jusqu'à ce que ladite partie mâle soit placée dans ladite section et de telle sorte qu'il n'y ait aucun effet de blocage ou de support
